# FASCICULE DE BREVET EUROPEEN

(11) **EP 2 729 425 B1**
(45) Date de publication et mention de la délivrance du brevet: **04.05.2016**
(21) Numéro de dépôt: 12729503.8
(22) Date de dépôt: 15.06.2012
(51) Int. Cl.: C03C 3/087

(54) **FEUILLE DE VERRE FLOTTE A HAUTE TRANSMISSION ENERGETIQUE**
FOLIE AUS FLOATGLAS MIT HOHER ENERGIEÜBETRAGUNG
SHEET OF FLOAT GLASS HAVING HIGH ENERGY TRANSMISSION

(30) Priorité: 04.07.2011 BE 201100416
(43) Date de publication de la demande: 14.05.2014
(73) Titulaire: AGC Glass Europe, 1348 Louvain-la-Neuve (BE)
(72) Inventeur: DOGIMONT, Audrey, B-6040 Jumet (BE); FEDULLO, Nicolas, B-6040 Jumet (BE); HENNECKER, Sébastien, B-6040 Jumet (BE)
(74) Mandataire: Bayot, Daisy
(86) Numéro de dépôt international: PCT/EP2012/061418
(87) Numéro de publication internationale: WO 2013/004470

(56) Documents cités:
- WO-A1-2007/106226
- FR-A1- 2 921 356
- US-A- 5 436 206
- US-A1- 2006 248 923
- US-A1- 2007 209 698

## Description

### 1. Domaine de l'invention

Le domaine de l'invention est celui des verres à haute transmission énergétique, utilisables notamment dans les modules photovoltaïques ou les miroirs solaires. Plus précisément, l'invention concerne une telle feuille de verre qui est formée par le procédé de flottage (ou « float »), consistant à déverser le verre en fusion sur un bain d'étain fondu sous conditions réductrices, également appelée feuille de verre flotté.

Dans le domaine du solaire où le verre est utilisé comme substrat pour des miroirs solaires ou recouvrant des cellules photovoltaïques, il est bien entendu extrêmement avantageux que le verre employé, qui doit être traversé par les rayonnements du soleil, présente une transmission visible et/ou énergétique très élevée. L'efficacité d'une cellule solaire est en effet significativement améliorée par une augmentation même très faible de cette transmission. En particulier, une transmission visible et/ou énergétique supérieure à 89%, de préférence supérieure à 90% ou même supérieure à 91% est hautement désirée.

Pour quantifier la transmission du verre dans le domaine englobant le visible et l'infrarouge solaire (ou proche infrarouge), on définit une transmission énergétique (TE), mesurée selon la norme ISO9050 entre les longueurs d'onde 300 et 2500 nm. Dans la présente description ainsi que dans les revendications, la transmission énergétique est mesurée selon cette norme et donnée pour une épaisseur de 4 mm (TE4).

Pour quantifier la transmission du verre dans le domaine du visible, on définit une transmission lumineuse (TL), calculée entre les longueurs d'onde de 380 et 780 nm selon la norme ISO9050, et mesurée avec l'illuminant D65 (TLD) tel que défini par la norme ISO/CIE 10526 en considérant l'observateur de référence colorimétrique C. I. E. 1931 tel que défini par la norme ISO/CIE 10527. Dans la présente description ainsi que dans les revendications, la transmission lumineuse est mesurée selon cette norme et donnée pour une épaisseur de 4 mm (TLD4) sous un angle d'observation solide de 2°.

### 2. Art antérieur

Pour obtenir des valeurs de TL et/ou TE supérieures à 89% voire supérieures à 90%, il est connu de l'état de la technique de diminuer la teneur totale en fer dans le verre (exprimée en terme de Fe₂O₃ selon la pratique standard dans le domaine). Les verres silico-sodo-calciques dits « clairs » ou « extra-clairs » contiennent toujours du fer car celui-ci est présent comme impureté dans la plupart des matières premières utilisées (sable, calcaire, dolomie...). Le fer existe dans la structure du verre sous la forme d'ions ferriques Fe³⁺ et d'ions ferreux Fe²⁺. La présence d'ions ferriques Fe³⁺ confère au verre une légère absorption de la lumière visible de faible longueur d'onde et une forte absorption dans le proche ultraviolet (large bande d'absorption centrée sur 380 nm), tandis que la présence d'ions ferreux Fe²⁺ (parfois exprimée en oxyde FeO) provoque une forte absorption dans le proche infrarouge (bande d'absorption centrée sur 1050 nm). Les ions ferriques Fe³⁺ procurent au verre une légère coloration jaune tandis que les ions ferreux Fe²⁺ donnent une coloration bleu-vert prononcée. Ainsi, l'augmentation de la teneur en fer totale (sous ses deux formes) accentue l'absorption dans le visible, au détriment de la transmission lumineuse. De plus, une forte concentration en ions ferreux Fe²⁺ entraîne une diminution de la transmission énergétique. Il est ainsi également connu, pour augmenter davantage la transmission énergétique du verre, d'oxyder le fer présent dans le verre, c'est-à-dire de diminuer la teneur en ions ferreux au profit de la teneur en ions ferriques. Le degré d'oxydation d'un verre est donné par son rédox, défini comme le rapport en poids d'atome de Fe²⁺ par rapport au poids total des atomes de fer présents dans le verre, Fe²⁺/Fe total.

Afin de diminuer le rédox du verre, plusieurs solutions ont été proposées.

Il est par exemple connu d'ajouter au verre de l'oxyde de cérium (CeO₂). Celui-ci est toutefois très onéreux et susceptible d'être à l'origine du phénomène de "solarisation" dans lequel la transmission du verre diminue fortement après absorption de rayonnements ultraviolets.

Il est également connu d'ajouter au verre de l'antimoine (sous diverses formes). Toutefois, il est bien connu de l'état de la technique, notamment de la demande WO2009/047462 A1, que l'antimoine est incompatible avec le procédé de flottage du verre et il est donc à ce jour exclusivement utilisé pour des verres obtenus par d'autres techniques et, en particulier, pour le verre coulé et laminé (verre « cast »). En effet, dans les conditions réductrices nécessaires à la non-oxydation du bain d'étain utilisé dans le procédé de flottage, l'antimoine se volatilise puis se condense sur la feuille de verre en formation, générant une coloration indésirable en surface du verre, causant alors une diminution de sa transmission fort préjudiciable pour des verres de type extra-clairs.

Les demandes WO2007/106223A1 et WO2007/106226A1 divulguent d'ailleurs des compositions de verre à bas fer et à haute transmission dénuées d'antimoine ou en tous les cas, présent en très faibles quantités (inférieures à 100 ppm, de préférence inférieures à 50 ppm ou encore inférieures à 5 ppm). Selon ces demandes, l'absence d'antimoine est fortement conseillée car l'antimoine est incompatible avec le bain d'étain du procédé de flottage. La diminution du rédox dans ce cas est obtenue par ajout de sulfates dans le batch des matières premières. Toutefois, l'ajout de sulfates peut donner lieu à la formation de mousse dans le four de fusion ce qui est connu pour donner lieu à des problèmes de qualité du verre produit.

La demande WO2006/121601A1 décrit, quant à elle, des verres principalement imprimés. Ceux-ci sont typiquement obtenus par coulage du verre en fusion qui passe entre deux rouleaux métalliques espacés suivant l'épaisseur souhaitée de la feuille et présentant des motifs dans le cas où on désire obtenir un verre imprimé. Le verre de WO2006/121601A1 peut comprendre de 100 (0,01 %) à 10000 ppm en poids (1%) d'oxyde d'antimoine Sb₂O₃ et de préférence, de 1000 à 3000 ppm en poids. Des valeurs aussi élevées d'oxyde d'antimoine, en particulier la gamme préférée de 1000 à 3000 ppm, ne peuvent bien entendu pas être utilisées dans un procédé de flottage car cela résulterait en un verre flotté présentant une coloration en surface inacceptable pour des applications solaires et ne permettraient pas d'atteindre les valeurs de transmission annoncées dans la demande WO2006/121601A1.

### 3. Objectifs de l'invention

L'invention a notamment pour objectif de pallier les inconvénients de l'art antérieur, c'est-à-dire fournir une feuille de verre flotté à haute transmission énergétique.

Plus précisément, un objectif de l'invention, dans au moins un de ses modes de réalisation, est de fournir une feuille de verre flotté à haute transmission énergétique, via notamment une oxydation du verre qui est compatible avec le procédé de flottage, tout en évitant le phénomène de solarisation et la formation de mousse dans le four de fusion.

Un autre objectif de l'invention est de fournir une solution aux désavantages de l'art antérieur qui soit simple et économique.

### 4. Exposé de l'invention

Conformément à un mode de réalisation particulier, l'invention concerne une feuille de verre flotté ayant une composition qui comprend, en une teneur exprimée en pourcentages en poids total de verre :

| | |
|---|---|
| SiO₂ | 60 - 75% |
| Al₂O₃ | 0 - 10% |
| B₂O₃ | 0 - 5% |
| | |
| CaO | 0 - 15% |
| MgO | 0 - 10% |
| Na₂O | 5 - 20% |
| K₂O | 0 - 10% |
| BaO | 0 - 5% |
| fer total (exprimé en Fe₂O₃) | 0,001 à 0,06%. |

Selon l'invention, la composition comprend une teneur, exprimée en pourcentage en poids total de verre, de 0,02 à 0,07% en antimoine (exprimé en Sb₂O₃).

Ainsi, l'invention repose sur une approche tout à fait nouvelle et inventive car elle permet de solutionner les inconvénients de l'art antérieur et de résoudre le problème technique posé. Les inventeurs ont en effet mis en évidence de manière surprenante qu'en sélectionnant la gamme particulière de 0,02 à 0,07% en poids d'antimoine (exprimé en Sb₂O₃), associée aux autres critères de composition, on obtient une augmentation de la transmission énergétique de la feuille de verre flotté semblable à celle qui peut être observée dans le cas d'un verre laminé type « cast ». Les inventeurs ont en particulier découvert que cette gamme précise restreinte de teneurs en antimoine (exprimé en Sb₂O₃) permettait un gain en transmission énergétique car, dans cette gamme, l'antimoine entraîne une augmentation de ladite transmission (due à son pouvoir oxydant) qui est supérieure à la perte en transmission due au phénomène de coloration en surface du verre flotté.

Dans l'ensemble du présent texte, lorsqu'une limite numérique ou une gamme est indiqué, les extrémités sont inclues. En outre, toutes les valeurs entières et sous-domaines dans limite numérique ou une gamme sont expressément inclues comme si explicitement écrites. Dans l'ensemble du présent texte également, les valeurs de teneur en pourcentages sont des valeurs pondérales, exprimées par rapport au poids total du verre.

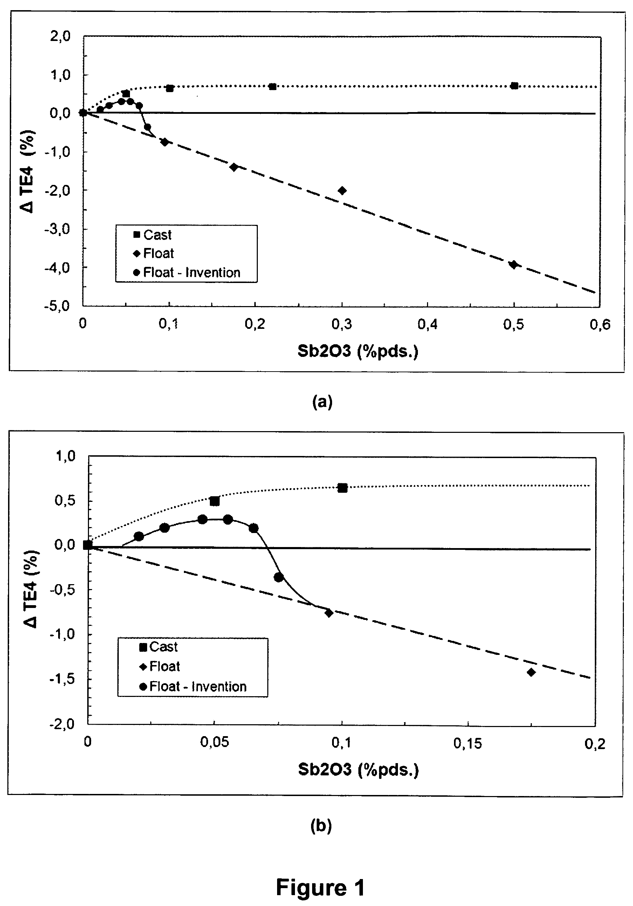

D'autres caractéristiques et avantages de l'invention apparaîtront plus clairement à la lecture de la description suivante d'un mode de réalisation préférentiel, donné à titre de simple exemple illustratif et non limitatif, et de la figure 1 qui représente l'effet de l'addition d'antimoine sur la transmission énergétique d'une feuille de verre de type « cast » selon l'état de la technique et d'une feuille de verre flotté.

### 5. Description d'un mode de réalisation de l'invention

La feuille de verre selon l'invention est une feuille de verre flotté. Par feuille de verre flotté, on entend une feuille de verre formée par le procédé de flottage (ou « float »), consistant à déverser le verre en fusion sur un bain d'étain fondu, sous conditions réductrices. Une feuille de verre flotté comporte, de façon connue, une face dite « face étain », c'est-à-dire une face enrichie en étain dans la masse du verre proche de la surface de la feuille. Par enrichissement en étain, on entend une augmentation de la concentration en étain par rapport à la composition du verre à coeur qui peut être substantiellement nulle (exempte d'étain) ou non.

Selon un mode de réalisation de l'invention, la concentration en étain à partir de la surface du verre se répartit dans la masse du verre selon un profil qui évolue vers zéro ou vers une valeur constante identique à la concentration présente dans le coeur du verre à partir d'une profondeur de la surface comprise entre 10 à 100 microns. Selon ce mode de réalisation de l'invention, le profil de concentration en étain peut décroître continûment et de façon monotone à partir de la surface du verre ou il peut présenter un pic maximum.

Selon un mode de réalisation de l'invention, la composition comprend une teneur, exprimée en pourcentage en poids total de verre, de 0,03 à 0,06% en antimoine (exprimé en Sb₂O₃). Dans une telle gamme de teneurs en antimoine, l'augmentation de la transmission énergétique de la feuille de verre flotté est supérieure.

Selon l'invention, la composition comprend une teneur en fer total (exprimé en Fe₂O₃) de 0,001 à 0,06% en poids par rapport au poids total du verre. Une teneur en fer total (exprimé en Fe₂O₃) supérieure ou égale à 0,001% en poids par rapport au poids total du verre permet de ne pas trop pénaliser le coût du verre car de si faibles valeurs nécessitent souvent des matières premières très pures onéreuses ou bien une purification de celles-ci. Une teneur en fer total (exprimé en Fe₂O₃) inférieure ou égale à 0,06% en poids par rapport au poids total du verre permet d'augmenter la transmission optique (en particulier, lumineuse) de la feuille de verre. De préférence, la teneur en fer total (exprimé en Fe₂O₃) est 0,001 à 0,02% en poids par rapport au poids total du verre. Une teneur en fer total (exprimé en Fe₂O₃) inférieure ou égale à 0,02% en poids par rapport au poids total du verre permet d'augmenter davantage la transmission énergétique de la feuille de verre.

Selon un mode de réalisation avantageux de l'invention, la composition présente un rédox de 0,01 à 0,4. Cette gamme de rédox permet d'obtenir des propriétés optiques très satisfaisantes et en particulier, en termes de transmission énergétique. De préférence, la composition présente un rédox de 0,1 à 0,3. De manière toute préférée, la composition présente un rédox de 0,1 à 0,25.

Selon l'invention, la composition de la feuille de verre flotté peut comprendre, en plus des impuretés contenues notamment dans les matières premières, une faible proportion d'additifs (tels que des agents aidant la fusion ou l'affinage du verre) ou d'éléments provenant de la dissolution des réfractaires constituant les fours de fusion.

De préférence, la composition de la feuille de verre flotté est exempt d'arsenic (souvent exprimée sous forme d'oxyde As₂O₃), qui est un agent oxydant à haute toxicité. Par « exempt », on entend que la composition comprend une teneur maximale en arsenic (exprimée en As₂O₃) qui est de l'ordre de 10 ppm (1 ppm = 0,0001 %).

Pour d'autres raisons évoquées ci-dessus (éviter le phénomène de solarisation), la composition de la feuille de verre flotté est de préférence exempt de cérium (souvent exprimée sous forme d'oxyde CeO₂). Par « exempt », on entend que la composition comprend une teneur maximale en cérium (exprimée en CeO₂) qui est de l'ordre de 30 ppm.

De manière toute préférée, la composition de la feuille de verre flotté est exempt à la fois d'arsenic et de cérium.

De préférence, la composition de la feuille de verre flotté ne comprend aucun agent colorant autre que le fer, comme par exemple, le sélénium, le cuivre et les oxydes de cobalt, cuivre, chrome, néodyme. Ces agents colorants entraîneraient en effet une coloration préjudiciable dans la composition de l'invention. Leur effet de coloration se manifeste d'ailleurs souvent à de faibles teneurs, de l'ordre de quelques ppm ou moins pour certains. Leur présence diminuerait ainsi fortement la transmission optique de la feuille de verre. Néanmoins, il arrive que le verre extra-clair présente des traces de certains de ces éléments colorants, suite à des contaminations ou l'utilisation de certaines matières premières moins chères. Pour certaines applications, il peut toutefois être avantageux d'ajouter de l'oxyde de cobalt en une teneur inférieure à 1 ppm, pour conférer une légère coloration bleu au niveau de la tranche de la feuille de verre.

La feuille de verre flotté selon l'invention a de préférence une transmission énergétique, mesurée pour une épaisseur de 4 mm (TE4), d'au moins 89%. Avantageusement, la feuille de verre flotté selon l'invention a une transmission énergétique, mesurée pour une épaisseur de 4 mm (TE4), d'au moins 90%, et mieux encore, d'au moins 91%.

La feuille de verre flotté selon l'invention a de préférence une transmission lumineuse, mesurée avec l'illuminant D65 selon la norme ISO9050 et pour une épaisseur de 4 mm (TLD4), d'au moins 90,5 %.

Dans le cas d'un module photovoltaïque solaire, la feuille de verre flotté selon l'invention constitue de préférence le substrat de protection (ou couvercle) des cellules photovoltaïques.

Selon un mode de réalisation de l'invention, la feuille de verre flotté est revêtue d'au moins une couche mince transparente et conductrice de l'électricité. Ce mode de réalisation est avantageux pour des applications photovoltaïques. Lorsque la feuille de verre est utilisée comme substrat protecteur d'un module photovoltaïque, la couche mince transparente et conductrice est disposée en face interne, c'est-à-dire entre la feuille de verre et les cellules solaires.

Une couche mince transparente et conductrice selon l'invention peut, par exemple, être une couche à base de SnO₂:F, de SnO₂:Sb ou d'ITO (oxyde d'indium and d'étain), ZnO:Al ou encore ZnO:Ga.

Selon un autre mode de réalisation avantageux de l'invention, la feuille de verre flotté est revêtue d'au moins une couche antirefléchissante (ou anti-reflet). Ce mode de réalisation est avantageux dans le cas des applications photovoltaïques afin de maximiser la transmission énergétique de la feuille de verre et, par exemple, d'augmenter ainsi l'efficacité du module solaire comportant cette feuille en tant que substrat (ou couvercle) recouvrant des cellules photovoltaïques. Dans des applications dans le domaine solaire (photovoltaïque ou thermique), lorsque la feuille de verre est utilisée comme substrat protecteur, la couche antirefléchissante est disposée en face externe, c'est-à-dire côté ensoleillement.

Une couche antirefléchissante selon l'invention peut, par exemple, être une couche à base de silice poreuse à bas indice de réfraction ou elle peut être constituée de plusieurs strates (empilement), notamment un empilement de couches de matériau diélectrique alternant des couches à bas et haut indices de réfraction et se terminant par une couche à bas indice de réfraction.

Selon un mode de réalisation, la feuille de verre flotté est revêtue d'au moins une couche mince transparente et conductrice de l'électricité sur une première face et d'au moins une couche antirefléchissante sur l'autre face.

Selon encore un mode de réalisation, la feuille de verre flotté est revêtue d'au moins une couche antirefléchissante sur chacune de ses faces.

Selon un autre mode de réalisation, la feuille de verre flotté est revêtue d'au moins une couche antisalissure. Une telle couche antisalissure peut être combinée à une couche mince transparente et conductrice de l'électricité, déposée sur la face opposée. Une telle couche antisalissure peut également être combinée à une couche antirefléchissante déposée sur la même face, la couche antisalissure étant à l'extérieur de l'empilement et recouvrant donc la couche antirefléchissante.

Selon encore un autre mode de réalisation, la feuille de verre flotté est revêtue d'au moins une couche miroir. Une telle couche miroir est par exemple une couche à base d'argent. Ce mode de réalisation est avantageux dans le cas des applications de miroirs solaires (plans ou paraboliques).

En fonction des applications et/ou des propriétés désirées, d'autres couches peuvent être déposées sur l'une et/ou l'autre face de la feuille de verre flotté selon l'invention.

La feuille de verre flotté selon l'invention peut avoir une épaisseur de 0,5 à 15 mm. Elle peut être intégrée à un vitrage multiple (notamment double ou triple). On entend par vitrage multiple, un vitrage qui comprend au moins deux feuilles de verre ménageant un espace rempli de gaz entre chaque couple de feuilles. La feuille de verre selon l'invention peut également être feuilletée et/ou trempé et/ou durcie et/ou bombée.

L'invention a également pour objet un module photovoltaïque solaire ou un miroir pour la concentration d'énergie solaire, comprenant au moins une feuille de verre flotté selon l'invention.

Les exemples qui suivent illustrent l'invention, sans intention de limiter de quelque façon sa couverture.

### Exemples

Les exemples suivants sont destinés à comparer le gain/la perte en transmission énergétique obtenu(e) par l'ajout d'une certaine teneur en antimoine pour des verres formés en laboratoire par un procédé de type « cast » (fusion sans atmosphère réductrice) et par un procédé de type « float » (fusion suivie d'un séjour à haute température dans une atmosphère réductrice). Le procédé de type « float » réalisé en laboratoire reproduit aussi fidèlement que possible l'atmosphère réductrice (5% H₂ + 95% N₂) et le profil de température qu'un verre en fusion peut subir lors de son formage par un procédé de flottage.

Les matières premières ont été mélangées sous forme de poudre et placées en creuset pour la fusion sans atmosphère réductrice.

Les verres testés ont tous la composition indiquée ci-dessous à l'exception de la quantité d'antimoine variable d'un verre à l'autre. La teneur en antimoine, exprimée sous forme de Sb₂O₃, a été fixée aux valeurs suivantes en pourcentage en poids total de verre d'un échantillon à l'autre : 0 ; 0,02 ; 0,03 ; 0,045 ; 0,055 ; 0,065 ; 0,075 ; 0,095 ; 0,1 ; 0,175 ; 0,22 ; 0,3 et 0,5 %.

| Composant | Teneur [% en poids] |
|---|---|
| CaO | 9 |
| K₂O | 0,015 |
| Na₂O | 14 |
| Fe₂O₃ | 0,01 |
| SO₃ | 0,3 |
| TiO₂ | 0,015 |
| Al₂O₃ | 0,7 |
| MgO | 4,5 |
| Sb₂O₃ | Variable (de 0 à 0,5%) |

Après cette première fusion sans atmosphère réductrice, les échantillons obtenus correspondent typiquement à des verres obtenus par un procédé de type « cast ». Les propriétés optiques de chaque échantillon de verre avec la composition type et une certaine teneur en Sb₂O₃ ont été déterminées et en particulier, la transmission énergétique a été mesurée selon la norme ISO9050 (TE).

Les échantillons sont ensuite placés dans un four sous atmosphère réductrice (95% N₂ + 5% H₂) à 180°C et chauffé jusqu'à 950°C en 10 minutes. Les échantillons sont ensuite refroidis jusqu'à 600°C en 8 minutes. Ils sont alors sortis du four et lentement refroidis à température ambiante dans un four de recuit sous atmosphère ambiante.

Les échantillons obtenus après cette procédure expérimentale en laboratoire correspondent typiquement à des verres obtenus par un procédé de type « float ». Les propriétés optiques de ces échantillons de verre ont finalement été déterminées et en particulier, la transmission énergétique a été mesurée selon la norme ISO9050 (TE).

Les valeurs de TE pour une épaisseur de 4 mm ont été comparées entre les verres type « cast » et les verres de type « float » afin de vérifier si le gain en transmission énergétique du à l'effet oxydant de l'oxyde d'antimoine est plus grand que la perte en transmission due à la coloration causée par l'antimoine après traitement sous conditions réductrices.

La figure 1 (a) représente la différence (ΔTE4) entre la transmission énergétique de chacun de échantillons de verre à base d'antimoine et celle d'un échantillon de verre sans antimoine (0 wt.% Sb₂O₃) selon les deux types de formage pré-cités. La figue 1 (b) est un agrandissement de la figure 1 (a).

Cette figure montre dès lors que, si la transmission énergétique d'un verre de type « cast » augmente avec la teneur d'antimoine quelle que soit cette teneur, ceci n'est pas valable pour un verre de type « float ». En effet, un gain en transmission énergétique est observé uniquement dans la gamme de 0,02 à 0,07% en poids en Sb₂O₃. De plus grandes concentrations en antimoine engendrent une coloration et une perte de transmission indésirables et significatives alors que de plus faibles concentrations en antimoine sont inefficaces pour augmenter la transmission énergétique de manière significative.

Ainsi, une teneur en antimoine dans la gamme revendiquée permet une augmentation de la transmission énergétique pouvant atteindre 0,3% ce qui est significatif dans le domaine du solaire.

## Revendications

1. Feuille de verre flotté ayant une composition qui comprend, en une teneur exprimée en pourcentages en poids total de verre :
| | |
|---|---|
| SiO₂ | 60 - 75% |
| Al₂O₃ | 0 - 10% |
| B₂O₃ | 0 - 5% |
| | |
| CaO | 0 - 15% |
| MgO | 0 - 10% |
| Na₂O | 5 - 20% |
| K₂O | 0 - 10% |
| BaO | 0 - 5% |
| fer total (exprimé en Fe₂O₃) | 0,001 à 0,06%, |
**caractérisée en ce que** la composition comprend une teneur, exprimée en pourcentage en poids total de verre, de 0,02 à 0,07% en antimoine (exprimé en Sb₂O₃).

2. Feuille de verre flotté selon l'une des revendications précédentes, **caractérisée en ce que** la composition comprend une teneur, exprimée en pourcentage en poids total de verre, de 0,03 à 0,06% en antimoine (exprimé en Sb₂O₃).

3. Feuille de verre flotté selon l'une des revendications précédentes, **caractérisée en ce que** la composition comprend une teneur, exprimée en pourcentages en poids total de verre, de 0,001 à 0,02% en fer total (exprimé en Fe₂O₃)

4. Feuille de verre flotté selon l'une des revendications précédentes, **caractérisée en ce que** la composition présente un rédox de 0,01 à 0,4.

5. Feuille de verre flotté selon la revendication précédente, **caractérisée en ce que** la composition présente un rédox de 0,1 à 0,3.

6. Feuille de verre flotté selon l'une des revendications précédentes, **caractérisée en ce que** la composition est exempt de cérium.

7. Feuille de verre flotté selon l'une des revendications précédentes, **caractérisée en ce que** la composition est exempt d'arsenic.

8. Feuille de verre flotté selon l'une des revendications précédentes, **caractérisée en ce qu'**elle a une transmission énergétique, mesurée pour une épaisseur de 4 mm (TE4), d'au moins 89%.

9. Feuille de verre flotté selon la revendication précédente, **caractérisée en ce qu'**elle a une transmission énergétique, mesurée pour une épaisseur de 4 mm (TE4), d'au moins 90%.

10. Feuille de verre flotté selon la revendication précédente, **caractérisée en ce qu'**elle a une transmission énergétique, mesurée pour une épaisseur de 4 mm (TE4), d'au moins 91%.

11. Feuille de verre flotté selon l'une des revendications précédentes, **caractérisée en ce qu'**elle est revêtue d'au moins une couche mince transparente et conductrice de l'électricité.

12. Feuille de verre flotté selon l'une des revendications précédentes, **caractérisée en ce qu'**elle est revêtue d'au moins une couche antisalissure.

13. Feuille de verre flotté selon l'une des revendications précédentes, **caractérisée en ce qu'**elle est revêtue d'au moins une couche antirefléchissante.

14. Feuille de verre flotté selon l'une des revendications 1 à 12, **caractérisée en ce qu'**elle est revêtue d'au moins une couche miroir.

15. Module photovoltaïque solaire ou miroir pour la concentration d'énergie solaire, comprenant au moins une feuille de verre flotté selon l'une des revendications 1 à 14.

## Patentansprüche

1. Folie aus Floatglas mit einer Zusammensetzung, die, in einem Anteil ausgedrückt als Gesamtgewichtsprozentsätze an Glas, Folgendes umfasst:
| | |
|---|---|
| SiO₂ | 60 - 75% |
| Al₂O₃ | 0 - 10% |
| B₂O₃ | 0 - 5% |
| CaO | 0 - 15% |
| MgO | 0 - 10% |
| Na₂O | 5 - 20% |
| K₂O | 0 - 10% |
| BaO | 0 - 5% |
| Gesamteisen (ausgedrückt als Fe₂O₃) | 0,001 bis 0,06%, |
**dadurch gekennzeichnet, dass** die Zusammensetzung einen Anteil, ausgedrückt als Gesamtgewichtsprozentsatz an Glas, von 0,02 bis 0,07 % Antimon (ausgedrückt als Sb₂O₃), umfasst.

2. Folie aus Floatglas nach einem der vorhergehenden Ansprüche, **dadurch gekennzeichnet, dass** die Zusammensetzung einen Anteil, ausgedrückt als Gesamtgewichtsprozentsatz an Glas, von 0,03 bis 0,06 % Antimon (ausgedrückt als Sb203), umfasst.

3. Folie aus Floatglas nach einem der vorhergehenden Ansprüche, **dadurch gekennzeichnet, dass** die Zusammensetzung einen Anteil, ausgedrückt als Gesamtgewichtsprozentsatz an Glas, von 0,001 bis 0,02% Gesamteisen (ausgedrückt als Fe203), umfasst.

4. Folie aus Floatglas nach einem der vorhergehenden Ansprüche, **dadurch gekennzeichnet, dass** die Zusammensetzung einen Redox von 0,01 bis 0,4 aufweist.

5. Folie aus Floatglas nach dem vorhergehenden Anspruch, **dadurch gekennzeichnet, dass** die Zusammensetzung einen Redox von 0,1 bis 0,3 aufweist.

6. Folie aus Floatglas nach einem der vorhergehenden Ansprüche, **dadurch gekennzeichnet, dass** die Zusammensetzung frei von Cer ist.

7. Folie aus Floatglas nach einem der vorhergehenden Ansprüche, **dadurch gekennzeichnet, dass** die Zusammensetzung frei von Arsen ist.

8. Folie aus Floatglas nach einem der vorhergehenden Ansprüche, **dadurch gekennzeichnet, dass** sie eine Energieübertragung, gemessen für eine Dicke von 4 mm (TE4), von mindestens 89 % aufweist.

9. Folie aus Floatglas nach dem vorhergehenden Anspruch, **dadurch gekennzeichnet, dass** sie eine Energieübertragung, gemessen für eine Dicke von 4 mm (TE4), von mindestens 90 % aufweist.

10. Folie aus Floatglas nach dem vorhergehenden Anspruch, **dadurch gekennzeichnet, dass** sie eine Energieübertragung, gemessen für eine Dicke von 4 mm (TE4), von mindestens 91 % aufweist.

11. Folie aus Floatglas nach einem der vorhergehenden Ansprüche, **dadurch gekennzeichnet, dass** sie mit mindestens einer dünnen, transparenten und elektrisch leitenden Schicht überzogen ist.

12. Folie aus Floatglas nach einem der vorhergehenden Ansprüche, **dadurch gekennzeichnet, dass** sie mit mindestens einer Antifouling-Schicht überzogen ist.

13. Folie aus Floatglas nach einem der vorhergehenden Ansprüche, **dadurch gekennzeichnet, dass** sie mit mindestens einer Antireflexionsschicht überzogen ist.

14. Folie aus Floatglas nach einem der Ansprüche 1 bis 12, **dadurch gekennzeichnet, dass** sie mit mindestens einer Spiegelschicht überzogen ist.

15. Photovoltaik-Solarmodul oder -spiegel zur Konzentration von Sonnenenergie, umfassend mindestens eine Folie aus Floatglas nach einem der Ansprüche 1 bis 14.

## Claims

1. Sheet of float glass having a composition comprising the following, in a content expressed in percentages by total weight of glass:
| | |
|---|---|
| SiO₂ | 60 - 75% |
| Al₂O₃ | 0 - 10% |
| B₂O₃ | 0 - 5% |
| CaO | 0 - 15% |
| MgO | 0 - 10% |
| Na₂O | 5 - 20% |
| K₂O | 0 - 10% |
| BaO | 0 - 5% |
| total iron (expressed as Fe₂O₃) | 0.001 to 0.06%, |
**characterised in that** the composition has a content expressed in percentage by total weight of glass of 0.02 to 0.07% by weight of antimony (expressed as Sb₂O₃).

2. Sheet of float glass according to one of the preceding claims, **characterised in that** the composition has a content expressed in percentage by total weight of glass of 0.03 to 0.06% by weight of antimony (expressed as Sb₂O₃).

3. Sheet of float glass according to one of the preceding claims, **characterised in that** the composition has a content expressed in percentages by total weight of glass of 0.001 to 0.02% by weight of total iron (expressed as Fe₂O₃).

4. Sheet of float glass according to one of the preceding claims, **characterised in that** the composition has a redox of 0.01 to 0.4.

5. Sheet of float glass according to one of the preceding claims, **characterised in that** the composition has a redox of 0.1 to 0.3.

6. Sheet of float glass according to one of the preceding claims, **characterised in that** the composition is free from cerium.

7. Sheet of float glass according to one of the preceding claims, **characterised in that** the composition is free from arsenic.

8. Sheet of float glass according to one of the preceding claims, **characterised in that** it has an energy transmission measured for a thickness of 4 mm (ET4) of at least 89%.

9. Sheet of float glass according to one of the preceding claims, **characterised in that** it has an energy transmission measured for a thickness of 4 mm (ET4) of at least 90%.

10. Sheet of float glass according to one of the preceding claims, **characterised in that** it has an energy transmission measured for a thickness of 4 mm (ET4) of at least 91%.

11. Sheet of float glass according to one of the preceding claims, **characterised in that** it is coated with at least one thin transparent and electrically conductive layer.

12. Sheet of float glass according to one of the preceding claims, **characterised in that** it is coated with at least one antifouling layer.

13. Sheet of float glass according to one of the preceding claims, **characterised in that** that it is coated with at least one antireflective layer.

14. Sheet of float glass according to one claims 1 to 14, **characterised in that** it is coated with at least one mirror layer.

15. Solar photovoltaic module or mirror for the concentration of solar energy comprising at least one sheet of float glass according to one of claims 1 to 14.
